# EUROPÄISCHE PATENTSCHRIFT

(11) **EP 1 967 245 B1**
(45) Veröffentlichungstag und Bekanntmachung des Hinweises auf die Patenterteilung: **25.08.2010**
(21) Anmeldenummer: 07122248.3
(22) Anmeldetag: 04.12.2007
(51) Int. Cl.: B01D 29/88, B01D 29/92, B01D 35/26, F04D 13/02

(54) **Filter-Pump-Einheit, Filter-Pump-Vorrichtung mit einer solchen Einheit sowie Verfahren zum Ausfiltern**
Filter-pump unit, filter-pump device with such a unit and filtering method
Unité de pompe-filtre, dispositif de pompe-filtre doté d'une telle unité tout comme procédé destiné à l'exfiltration

(30) Priorität: 14.02.2007 EP 07102352
(43) Veröffentlichungstag der Anmeldung: 10.09.2008
(73) Patentinhaber: Levitronix LLC, Waltham, MA 02451 (US)
(72) Erfinder: Schöb, Dr., Reto, 9200 Gossau (CH)
(74) Vertreter: Kluthe, Stefan

(56) Entgegenhaltungen:
- EP-A- 0 920 896
- DE-A1- 2 205 959
- DE-A1- 10 160 533
- GB-A- 2 141 040

## Beschreibung

Die Erfindung betrifft eine Filter-Pump-Einheit zum Ausfiltern von Partikeln aus einem Fluid sowie eine Filter-Pump-Vorrichtung mit einer solchen Einheit gemäss dem Oberbegriff des jeweiligen unabhängigen Vorrichtungsanspruchs. Die Erfindung betrifft ferner ein Verfahren zum Ausfiltern von Partikeln gemäss dem Oberbegriff des unabhängigen Verfahrensanspruchs.

In vielen industriellen Prozessen besteht die Notwendigkeit, ein Fluid vor seiner weiteren Verwendung einer Filterung zu unterziehen, um unerwünschte Verunreinigungen aus dem Fluid zu entfernen. Als ein Beispiel sei hier die Halbleiter- und Chipherstellung genannt. Beispielsweise müssen die Chemikalien, wie Säuren oder Fotolacke (Fotoresists), die zum Reinigen, Ätzen oder Maskieren der Wafer bzw. der Halbleiter dienen, höchsten Anforderungen hinsichtlich ihrer Reinheit genügen. Bei den heute üblichen Halbleiterstrukturen, die Gate Längen im Bereich von 100 nm oder weniger aufweisen, ist es notwendig hochreine Chemikalien zu verwenden. Selbst Partikel von wenigen zehn Nanometem Grösse in den Chemikalien können zu Verunreinigungen führen, welche den behandelten Wafer unbrauchbar machen.

Ein anderes Beispiel ist die Immersions-Litographie, die bei den fortgeschrittendsten Waferfertigungsprozessen zum Aufbelichten der Halbleiterstrukturen eingesetzt wird. Hier wird zwischen der Projektorlinse und der Waferoberfläche hochreines Wasser als Immersionsflüssigkeit verwendet.

Auch diese Flüssigkeit muss möglichst frei von Partikeln sein, die in der Grössenordnung der aufzubelichtenden Leiterbahnen liegen.

Daher müssen solche Fluide mit sehr feinen Filtern gefiltert werden, um die gewünschte Reinheit zu gewährleisten. Heute sind kommerziell bereits Filterelemente erhältlich, deren Porengrösse etwa 30 nm beträgt. Solche feinstmaschigen Filterelemente haben typischerweise keine einheitliche "Porengrösse. Daher charakterisiert man diese Filterelemente durch ihre Nennporengrösse und Rückhalteeffizienz (retention efficiency), die ein Mass dafür darstellt, wie viele Partikel der Nenngrösse mit dem Filterelement aus einem Fluid ausgefiltert werden können. Bei einer Rückhalteeffizienz von 99% geht man beispielsweise davon aus, dass mit einem Filterelement gegebener Nennporengrösse 99% der Partikel ausgefiltert werden können, die grösser sind als die Nenngrösse.

Da die Entwicklung eine noch weitere Miniaturisierung der Halbleiter- oder Chipstrukturen anstrebt, ist es wünschenswert, Filtereinheiten zur Verfügung zu haben, die noch kleinere Partikel, beispielsweise von weniger als 15 nm, zuverlässig aus einem Fluid herausfiltern kann.

Zudem werden häufig derartige Prozesse in Reinräumen der höchsten Reinraumklasse durchgeführt. Da diese Reinräume sehr kostenintensiv sind, ist es wünschenswert, möglichst kleine und kompakte Vorrichtungen zur Verfügung zu haben, die wenig Platzbedarf haben.

Daher widmet sich die Erfindung der Aufgabe, eine kompakte Filter-Pump-Einheit vorzuschlagen, mit der auch sehr kleine Partikel zuverlässig aus einem Fluid ausgefiltert werden können. Zudem soll eine derartige Filter-Pump-Vorrichtung bereitgestellt werden. Ferner soll durch die Erfindung ein Verfahren vorgeschlagen werden, mit welchem sehr kleine Partikel aus einem Fluid ausgefiltert werden können.

Die diese Aufgabe in apparativer und verfahrenstechnischer Hinsicht lösenden Gegenstände der Erfindung sind durch die unabhängigen Ansprüche der jeweiligen Kategorie gekennzeichnet.

Erfindungsgemäss wird also eine Filter-Pump-Einheit zum Ausfiltern von Partikeln aus einem Fluid vorgeschlagen mit einem Filtergehäuse, das einen Filterraum begrenzt und das einen Einlass sowie einen Auslass für das zu filternde Fluid aufweist, sowie mit einem im Filterraum vorgesehenen Filterelement mit einem Innenraum, welches einen Eingangsbereich von einem Ausgangsbereich des Filterraums abgrenzt, wobei der Eingangsbereich mit dem Einlass verbunden ist und der Ausgangsbereich mit dem Auslass, ferner mit einem Laufrad, welches als Teil einer Rotationspumpe das Fluid vom Eingangsbereich durch das Filterelement in den Ausgangsbereich fördern kann. Das Filter element weist eine axiale öffnung für eine Strömungsverbindung zwischen dem Ausgangsbereich und dem Laufrad auf, sodass zumindest ein Teil des Fluids aus dem Ausgangsbereich zu dem Laufrad zurückströmen kann.

Bei der erfindungsgemässen Filter-Pump-Einheit wird im Betriebszustand zumindest ein Teil des Fluids nach Durchströmen des Filterelements rezirkuliert und nochmals durch das Filterelement gefördert. Vorzugsweise wird das Fluid mehrfach rezirkuliert und nur ein kleiner Teil des vom Laufrad geförderten Fluids nach dem passieren des Filterelements durch den Auslass abgeführt. Es hat sich gezeigt, dass durch das mehrfache Durchströmen des Filterelements aus dem Fluid auch Partikel ausgefiltert werden können, die wesentlich kleiner sind als die Porengrösse des Filterelements. Somit kann durch das Rezirkulieren des Fluids in der Filter-Pump-Einheit erreicht werden, dass auch solche kleinen Partikel ausgefiltert werden, die beim einmaligen Durchströmen des Filterelements noch nicht zurückgehalten werden. Auf diese Weise lässt sich die Güte der Filterung mit der erfindungsgemässen Filter-Pump-Einheit deutlich verbessern. Da zudem die Filtereinheit mit dem Laufrad zu einer Filter-Pump-Einheit kombiniert ist, resultiert eine sehr kompakte und platzsparende Ausgestaltung.

Im Hinblick auf eine besonders kompakte Bauform ist vorzugsweise das Laufrad im Filtergehäuse angeordnet. Dies hat zudem den Vorteil, dass das Filterelement und das Laufrad in einer gemeinsamen baulichen Einheit integriert sind.

Vorzugsweise ist das Laufrad für eine berührungslose, magnetische Lagerung ausgestaltet. Somit kann auf mechanische Lager und auf Durchführungen in das Innere der Filter-Pump-Einheit verzichtet werden. Das hat den Vorteil, dass eine Kontamination des Fluids, wie sie beispielsweise durch Abrieb in einem mechanischem Lager auftreten kann, vermieden wird. Auch besteht nicht die Gefahr wie bei einer mechanischen Lagerung, dass die teilweise aggresiven oder abrasiven Fluide, die gefiltert werden, Lagerschäden verursachen können.

Eine weitere vorteilhafte Massnahme besteht darin, Mittel vorzusehen, die einen Strömungskurzschluss zwischen dem Einlass und dem Auslass verhindern. Somit ist gewährleistet, dass das Fluid nur durch das Filterelement hindurch vom Einlass zum Auslass gelangen kann

Ferner ist es vorteilhaft, in der Strömungsverbindung zwischen dem Ausgangsbereich und dem Laufrad ein Rückschlagventil vorzusehen. Hierdurch kann vermieden werden, dass gegebenenfalls vom Laufrad oder vom Einlass Fluid durch diese Strömungsverbindung in den Ausgangsbereich strömt, ohne das Filterelement zu passieren.

Vorzugsweise ist die Filter-Pump-Einheit strömungsmechanisch derartig ausgestaltet, dass im Betriebszustand die Menge an Fluid, die pro Zeit durch den Auslass strömt, kleiner ist als die Menge an Fluid, die pro Zeit durch die Strömungsverbindung aus dem Ausgangsbereich zurück zum Laufrad strömt. Hierdurch ist gewährleistet, dass das Fluid mehrfach durch das Filterelement rezirkuliert wird bevor es durch den Auslass ausströmt, wodurch die Güte der Filterung erhöht wird. Das Verhältnis der Mengen von rezirkuliertem Fluid zu ausströmendem Fluid sollte mehr als 2 zu 1 betragen" beispielsweise 10 zu 1, 50 zu 1 oder 100 zu 1.

Eine vorteilhafte Massnahme besteht darin, dass Mittel vorgesehen sind, welche eine Einstellung, insbesondere eine stufenlose Einstellung, des Verhältnisses zwischen der Menge an Fluid, die pro Zeit durch den Auslass strömt und der Menge an Fluid, die pro Zeit durch die Strömungsverbindung aus dem Ausgangsbereich zurück zum Laufrad strömt, ermöglichen. Dadurch kann die Filter-Pump-Einheit in sehr einfacher Weise an den jeweiligen Anwendungsfall angepasst werden.

Insbesondere kann als solches Mittel mindestens ein Regelventil vorgesehen sein, welches die Einstellung des Verhältnises der beiden Mengen an Fluid ermöglicht.

Zur Einstellung des Verhältnisses der beiden Fluidmengen ist es vorteilhaft, wenn ein Regelventil an der Strömungsverbindung zwischen dem Ausgangsbereich und dem Laufrad vorgesehen ist.

Unter praktischen Aspekten ist es eine bevorzugte Variante, wenn das Filtergehäuse mit dem Filterelement und dem Laufrad als Wegwerfeinheit ausgestaltet ist.

Erfindungsgemäss wird ferner eine Filter-Pump-Vorrichtung vorgeschlagen mit einer Filter-Pump-Einheit, die erfindungsgemäss ausgestaltet ist, sowie mit einer Antriebseinheit zum Antreiben des Laufrads.

Die Erläuterungen bezüglich der Filter-Pump-Einheit gelten in sinngemäss gleicher Weise auch für die Filter-Pump-Vorrichtung.

Vorzugsweise ist die Antriebseinheit magnetisch mit dem Laufrad gekoppelt. Somit ist keine mechanische Kopplung zwischen der Antriebseinheit und dem Laufrad notwendig und folglich auch keine Durchführung für eine Welle in das Filtergehäuse.

Besonders bevorzugt ist das Laufrad als Integralrotor ausgebildet, und die Antriebseinheit mit dem Laufrad als lagerloser Motor ausgestaltet, denn dies erlaubt eine besonders kompakte Ausgestaltung, bei der im Betriebszustand weder für die Lagerung noch für den Antrieb des Laufrads ein mechanischer Kontakt mit Lagern oder mit der Antriebseinheit notwendig ist.

Ferner wird durch die Erfindung ein Verfahren vorgeschlagen zum Ausfiltern von Partikeln aus einem Fluid mittels einer Filter-Pump-Einheit mit einem Filtergehäuse, das einen Filterraum begrenzt und das einen Einlass sowie einen Auslass für das zu filternde Fluid aufweist, sowie mit einem im Filterraum vorgesehenen Filterelement, welches einen Eingangsbereich von einem Ausgangsbereich des Filterraums abgrenzt, wobei der Eingangsbereich mit dem Einlass verbunden ist und der Ausgangsbereich mit dem Auslass, bei welchem Verfahren das Fluid mittels eines Laufrads vom Eingangsbereich durch das Filterelement in den Ausgangsbereich gefördert wird. Zumindest ein Teil des Fluids wird aus dem Ausgangsbereich zu dem Laufrad rezirkuliert und durchströmt das Filterelement mehrfach.

Durch das mehrfache Durchströmen des Filterelements können aus dem Fluid Partikel ausgefiltert werden, die deutlich kleiner sind, als die nominelle Porengrösse des Filterelements. Dies bedeutet eine wesentliche Verbesserung der Güte der Filterung.

Vorzugsweise wird mit dem Verfahren ein Fluid gefiltert, das Partikel enthält, die kleiner sind als die nominelle Porengrösse des Filterelements.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung sowohl in apparativer als auch in verfahrenstechnischer Hinsicht näher erläutert. In der schematischen Zeichnung zeigen teilweise im Schnitt:
- Fig. 1:: ein Ausführungsbeispiel einer erfindungsgemässen Filter-Pump- Vorrichtung mit einem ersten Ausführungsbeispiel einer erfindungsgemässen Filter-Pump-Einheit,
- Fig. 2:: ein zweites Ausführungsbeispiel einer erfindungsgemässen Filter-Pump-Einheit,
- Fig. 3:: ein drittes Ausführungsbeispiel einer erfindungsgemässen Filter- Pump-Einheit,
- Fig. 4:: eine Variante des dritten Ausführungsbeispiels,
- Fig. 5:: wie Fig. 4, jedoch mit geöffnetem Ventil, und
- Fig. 6:: eine weiteres Ausführungsbeispiel.

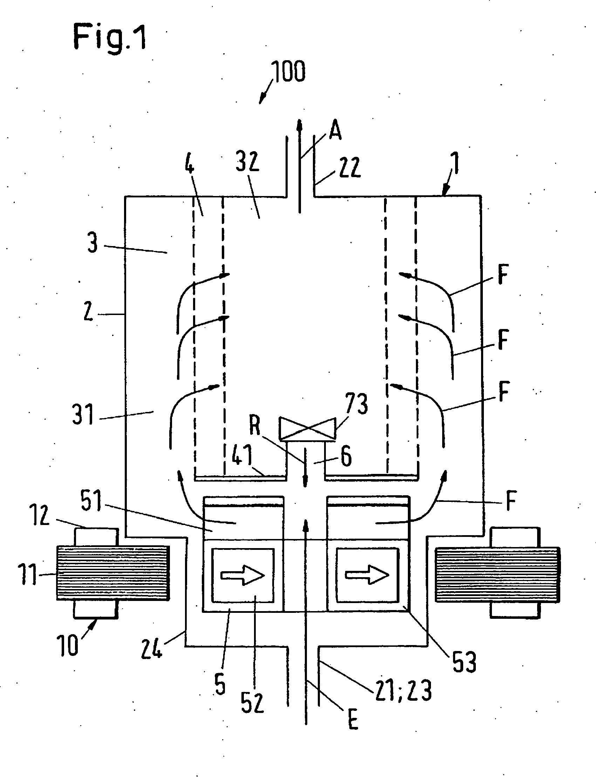

Fig. 1 zeigt in einer schematischen Schnittdarstellung ein Ausführungsbeispiel einer erfindungsgemässen Filter-Pump-Vorrichtung, die gesamthaft mit dem Bezugszeichen 100 versehen ist. Die Vorrichtung 100 umfasst eine Antriebseinheit 10, sowie ein erstes Ausführungsbeispiel einer erfindungsgemässen Filter-Pump-Einheit, die gesamthaft mit dem Bezugszeichen 1 bezeichnet ist.

Die Filter-Pump-Einheit 1 zum Ausfiltern von Partikeln aus einem Fluid umfasst ein Filtergehäuse 2, das einen Filterraum 3 begrenzt. Am Filtergehäuse 2 sind ein Einlass 21 und ein Auslass 22 vorgesehen, durch welche das zu filternde Fluid in den Filterraum 3 eingebracht werden kann, wie dies der Pfeil E andeutet bzw. das gefilterte Fluid aus dem Filterraum 3 abgeführt werden kann, wie dies der Pfeil A andeutet. Ferner ist am Filtergehäuse 3 ein Ablass 23 (Drain) vorgesehen, durch welchen das Fluid abgelassen werden kann, um den Filterraum 3 zu leeren. Bei dem in Fig. 1 dargestellten ersten Ausführungsbeispiel ist der Ablass 23 identisch mit dem Einlass 21. Es versteht sich, dass der Einlass 21, der Auslass 22 und der Ablass 23 jeweils mit einem (nicht dargestellten) Ventil oder sonstigen Absperr- oder Regelorgan versehen sein können, das jeweils manuell und/oder elektrisch bzw. automatisch betätigbar ist.

Im Filterraum 3 ist ein Filterelement 4 vorgesehen, das nur schematisch dargestellt ist. Das Filterelement 4 ist hier in an sich bekannter Weise als eine austauschbare Filterpatrone ausgestaltet. Das Filterelement 4 hat eine im wesentlichen zylindrische Form und einen Boden 41, der entweder integraler Bestandsteil des Filterelements 4 ist oder ein separates Teil, auf welches das Filterelement 4 aufgesetzt wird. Auf der Mantelfläche des Zylinders ist eine Filtermembran vorgesehen. Das Filterelement 4 grenzt einen Eingangsbereich 31 des Filterraums 3 von einem Ausgangsbereich 32 ab. Mit dem Eingangsbereich 31 ist dabei derjenige Teil des Filterraums 3 gemeint, der dem zu filternden Fluid vor dem Durchströmen des Filterelements 4 zur Verfügung steht, also der stromaufwärts des Filterelements 4 gelegene Bereich des Filterraums 3. Der Eingangsbereich 31 ist mit dem Einlass 21 verbunden, der in der darstellungsgemäss unteren Wandung also im Boden des Filtergehäuses 2 vorgesehen ist. Mit dem Ausgangsbereich 32 ist derjenige Bereich des Filterraums 3 gemeint, in den das Fluid nach dem Durchströmen des Filterelements 4 gelangt, also der stromabwärts des Filterelements 4 gelegene Bereich des Filterraums 3. Bei dem dargestellten Ausführungsbeispiel ist dies der Innenraum des im wesentlichen zylindrischen Filterelements 4. Der Ausgangsbereich 32 ist mit dem Auslass 22 verbunden, der in der darstellungsgemäss oberen Wandung des Filtergehäuses vorgesehen ist.

Darstellungsgemäss unterhalb des Filterelements 4 ist im Filtergehäuse 2 ein Laufrad 5 vorgesehen, welches als Teil einer Rotationspumpe, vorzugsweise einer Zentrifugalpumpe, das Fluid vom Eingangsbereich 31 durch das Filterelement 4 hindurch in den Ausgangsbereich 32 fördert. Das Laufrad 5 hat mehrere Flügel 51 zum Fördern des Fluids, wie dies durch die Pfeile F angedeutet ist. Gemäss einer bevorzugten Ausgestaltung ist das Laufrad 5 für eine berührungslose vollständig magnetische Lagerung ausgestaltet. Dazu umfasst das Laufrad 5 beispielsweise mindestens einen von einer Ummantelung 53 umschlossenen Permanentmagnet 52, im vorliegenden Ausführungsbeispiel einen permanentmagnetischen Ring. Die Magnetisierung des Permanentmagneten 52 ist durch den Pfeil ohne Bezugszeichen angedeutet.

Das Laufrad 5 ist im Bereich des Bodens des Filtergehäuses 2 angeordnet. Das Filtergehäuse 2 ist im wesentlichen zylinderförmig ausgestaltet, wobei im darstellungsgemäss untern Teil ein zylindrischer Bereich 24 vorgesehen ist, der einen kleineren Durchmesser aufweist als der Rest des Zylindergehäuses 2.

Vorzugsweise erfolgt auch der Antrieb des Laufrads 5 ohne mechanischen Kontakt, also berührungslos, das heisst es existiert keine mechanische Kopplung zwischen dem Laufrad 5 und der Antriebseinheit 10. Dazu umfasst die Antriebseinheit 10 einen Stator 11 mit einer Statorwicklung 12, um das Laufrad 5 anzutreiben. Der Stator ist im wesentlichen ringförmig ausgestaltet und umschliesst den unteren zylindrischen Bereich 24 des Filtergehäuses 2, in welchem das Laufrad 5 angeordnet ist. Die Kontroll- und Steuereinrichtung für die die Antriebseinheit 10 und das Laufrad 5 umfassende Rotationspumpe ist in Fig. 1 aus Gründen der Übersicht nicht dargestellt.

In einer besonders bevorzugten Ausgestaltung ist das Laufrad 5 als Integralrotor ausgebildet und die Antriebseinheit 10 ist zusammen mit dem Laufrad 5 als lagerloser Motor ausgestaltet. Eine solche Rotationspumpe wird z. B. in der EP-A-0 819 330 bzw. der US-A-6,100,618 offenbart. Mit dem Begriff Integralrotor ist dabei gemeint, dass das Laufrad 5 der Pumpe und der Rotor des die Pumpe antreibenden Motors identisch sind. Das Laufrad 5 fungiert sowohl als Rotor des motorischen Antriebs als auch als Rotor der Pumpe. Mit dem Begriff lagerloser Motor ist gemeint, dass das Laufrad vollkommen magnetisch gelagert ist, wobei keine separaten Magnetlager vorgesehen sind. Der Stator 11 ist sowohl Stator des elektrischen Antriebs als auch Stator der magnetischen Lagerung. Dazu umfasst die Statorwicklung 11 eine Antriebswicklung der Polpaarzahl p sowie eine Steuerwicklung der Polpaarzahl p±1. Damit ist es möglich, das Laufrad 5 sowohl anzutreiben als auch vollkommen berührungslos magnetisch im Stator 11 zu lagern. Bezüglich weiterer Details einer solchen Rotationspumpe sei hier auf die bereits zitierten Dokumente verwiesen.

Während des Betriebs generiert die von der nicht dargestellten Kontroll- und Steuereinrichtung angesteuerte Statorwicklung 12 ein Antriebsdrehfeld, das ein Drehmoment auf das Laufrad 5 bewirkt und dieses in Rotation versetzt. Ferner generiert die Steuerwicklung der Statorwicklung 12 ein magnetisches Steuerfeld, mit welchem die Position des Laufrads bezüglich des Stators 12 regelbar ist.

Natürlich sind auch solche Ausgestaltungen möglich, bei welchen für das Laufrad eine separate, das heist vom Antriebsstator 12 verschiedene Magnetlagerung vorgesehen ist, oder Ausgestaltungen, bei den zusätzlich oder alternativ mechanische Lagerungen oder sonstige Lagerungen wie beispielsweise hydrodynamische vorgesehen sind.

Erfindungsgemäss ist zwischen dem Ausgangsbereich 32 des Filterraums 3 und dem Laufrad 5 eine Strömungsverbindung 6 vorgesehen, durch welche zumindest ein Teil des Fluids aus dem Ausgangsbereich 32 zu dem Laufrad 5 zurückströmen kann. Diese Rezirkulation des Fluids ist durch den Pfeil R angedeutet. Bei dem ersten Ausführungsbeispiel umfasst die Strömungsverbindung 6 eine Öffnung, die im Boden 41 des Filterelements 4 vorgesehen ist. Durch diese Strömungsverbindung 6 kann das Fluid aus dem Ausgangsbereich 32 zu den unterhalb des Filterelements 4 rotierenden Flügeln 51 des Laufrads 5 strömen und wird von diesen rezirkuliert.

Die Wahl des Materials für die Filtermembran des Filterelements 4 und die Porengrösse bzw. die Strukturbreite der Filtermembran hängt vom Anwendungsfall ab. Mit der Porengrösse ist dabei eine charakteristische Filtergrösse (Filterrating) gemeint, welche ein Mass für die mittlere Porengrösse der Filtermembran ist. Mit dem Begriff Filtermembran sind auch Siebe, Siebbleche oder netzartige Strukturen zur Filterung gemeint.

Im Falle von Anwendungen in der Halbleiterindustrie, beispielsweise beim Reinigen, Ätzen, bei CMP-Prozessen oder beim Filtern von Säuren oder Fotolacken (Fotoresists) werden häufig Fluoropolymere als Material für die Filtermembran verwendet. Beispiele sind hier PTFE und PVDF. Selbstverständlich sind auch Filtermembrane bzw. Filterelemente 4 aus anderen Materialien möglich, beispielsweise aus anderen Kunststoffen, Verbundwerkstoffen, Keramiken oder keramisch beschichteten Substanzen. Die Filtermembrane können hergestellt werden, indem Folien oder dünne Materiallagen gestanzt, gebohrt, gelasert, Elektronenstrahl gelocht oder Wasserstrahl geschnitten werden, wobei grundsätzlich auch andere Techniken in Frage kommen.

Selbstverständlich ist es nicht notwendig, dass das Filterelement im wesentlichen zylindrisch ausgestaltet ist oder überhaupt einen Innenraum aufweist. Das Filterelement kann z. B. auch als planare Membran oder als planares Sieb ausgestaltet sein.

Die Filter-Pump-Einheit 1 dient zum Ausfiltern von Partikeln aus einem Fluid, insbesondere zum Erzeugen hochreiner Chemikalien oder hochreinen Wassers. Derartige Substanzen werden beispielsweise in der Halbleiterindustrie und der Chipproduktion benötigt. Als praxisrelevante Beispiele solcher Fluide seien hier Säuren genannt, die zum Reinigen und Ätzen von Wafern verwendet werden. Aufgrund der extrem kleinen Strukturen, die heute auf Chips realisiert werden und deren charakteristische Abmesseungen, z. B. die Gate Länge, im Bereich von deutlich unter 100 nm (beispielsweise 32 nm) liegen, ist es notwendig, aus den verwendeten Säuren oder Chemikalien selbst solche Partikel auszufiltern, die kleiner als 15 nm sind, weil sie schon gross genug sind, um auf dem Chip defekte zu verursachen.

Mit den feinsten heute erhältlichen Filterelementen, die eine nominelle Porengrösse von 30 nm aufweisen, können in konventionellen Filtervorrichtungen zuverlässig Partikel bis etwa 30 nm ausgefiltert werden. Für die vorliegende Erfindung ist die Erkenntnis wesentlich, dass sich durch das Rezirkulieren des zu filternden Fluids, das heisst durch das mehrfache Durchströmen des Filterelements 4 Partikel zuverlässig ausfiltern lassen, die deutlich kleiner sind als die nominelle Porengrösse des Filterelements 4. Beispielsweise können mit der erfindungsgemässen Filter-Pump-Einheit 1 bzw. mit dem erfindungsgemässen Verfahren bei Verwendung eines Filterelements 4 mit der nominellen Porengrösse von 30 nm Partikel ausgefiltert werden, die kleiner als 15 nm sind.

Im Betriebszustand der Filter-Pump-Vorrichtung 100 ist der Einlass 21 der Filter-Pump-Einheit 1 mit einer Fluidquelle verbunden und der Auslass 22 mit einer Dosier-, Abgabe-, oder Speichereinheit für das gefilterte Fluid. Durch die Rotation des Laufrads 5 wird das Fluid durch den Einlass 21 angesaugt und von den Flügeln 51 durch das Filterelement 4 in den Ausgangsbereich 32 gefördet. Von dort verlässt ein Teil des gefilterten Fluids die Filter-Pump-Einheit 1 durch den Auslass 22 (Pfeil A). Ein anderer Teil gelangt durch die Strömungsverbindung 6 wieder zu den Flügeln 51 des Laufrads 5 (Pfeil R), wird so rezirkuliert und von den Flügeln 51 des Laufrads 5 erneut durch das Filterelement 4 gefördert.

Um eine besonders gute Filterung zu erreichen, wird das zu filternde Fluid vielfach durch das Filterelement 4 bewegt, bevor es durch den Auslass 22 ausströmt. Beispielsweise kann die Menge des pro Zeit rezirkulierten Fluids etwa das Fünfzigfache der Menge Fluid betragen, das pro Zeit durch den Auslass 22 ausströmt. Das heisst wenn pro Minute ein Liter Fluid durch den Auslass 22 ausströmt, dann werden in der gleichen Zeit 50 Liter Fluid rezirkuliert. Dies entspricht statistisch gesehen der Tatsache, dass das Fluid das Filterelement etwa fünfzigmal durchströmt, bevor es durch den Auslass 22 ausströmt.

In der Praxis hat es sich als vorteilhaft erwiesen, wenn die Menge des pro Zeit rezirkulierten Fluids immer wesentlich grösser ist als die Menge des pro Zeit durch den Auslass 22 geförderten Fluids.

Durch die Massnahme des Rezirkulierens lassen sich zuverlässig Partikel ausfiltern, deren Grösse deutlich kleiner ist als die nominelle Porengrösse des Filterelements 4.

Damit auch unmittelbar nach Betriebsbeginn eine genügend gute Filterung des Fluids gewährleistet ist, kann der Auslass zunächst mit einem nicht dargestellten Absperrorgan verschlossen werden, sodass das Fluid zunächst vollständig rezirkuliert wird. Nach einer vorgebbaren Zeit wird dann der Auslass 22 geöffnet und die Förderung des bereits mehrfach durch das Filterelement geströmten Fluids kann beginnen.

Das Verhältnis zwischen rezirkulierter und ausgestossener Fluidmenge ist strömungsmechanisch bedingt und kann auf einen gewünschten Wert eingestellt werden. Die Einstellung dieses Verhältnisses kann - in nicht abschliessender Aufzählung - mithilfe eines oder mehrerer der folgenden Parameter erfolgen: Grösse z.B. Durchmesser des Auslasses 22 oder Einlasses 21, Grösse der Strömungsverbindung 6, Strömungswiderstand der Strömungsverbindung 6 oder des Einlasses 21 oder des Auslasses 22, Geometrie des Flügelrads 5 und der Flügel 51, Abstand des Flügelrads 5 von der Wand des Filtergehäuses 2, Drehzahl/Förderleistung der Zentrifugalpumpe, Druckgefälle am Auslass.

Die Einstellung des Verhältnisses zwischen rezirkulierter und ausgestossener Fluidmenge kann auch durch Regelventile an der Strömungsverbindung 6 und/oder am Auslass 22 geregelt werden. In Fig. 1 ist als optionales Element ein Regelventil 73 an der Strömungsverbindung 6 zwischen dem Ausgangsbereich 32 und dem Laufrad 5 dargestellt. Durch dieses Regelventil 73 lässt sich in einfacher Weise die Menge Fluid einstellen, die durch die Strömungsverbindung zurückströmt und damit das Verhältnis zwischen rezirkulierter und ausgestossener Fluidmenge.

Vorzugsweise ist das Filtergehäuse 2 mit dem Laufrad 5 und dem Filterelement 4 als Wegwerfeinheit ausgestaltet, beispielsweise als Wegwerfkartusche. Dazu kann das Filtergehäuse 2 einstückig angefertigt sein, mit darin enthaltenem Filterelement 4 und Laufrad 5. Diese Filter-Pump-Einheit 1 kann dann in die Antriebsvorrichtung 10 eingesetzt werden und ist sofort betriebsbereit. Nach Beendigung des Prozesses oder wenn beispielsweise das Filterelement verschlissen bzw. zugesetzt ist, wird die gesamte Filter-Pump-Einheit 1 aus der Antriebseinrichtung 10 entfernt, entsorgt und gegebenenfalls durch eine neue ersetzt.

Das Filtergehäuse 2 kann natürlich auch so ausgestaltet sein, dass man es öffnen und wieder verschliessen kann. Bei einer derartigen Ausgestaltung ist es möglich entweder nur das Filterelement 4 auszutauschen oder nur das Laufrad 5 oder das Filterelement 4 und das Laufrad 5. Natürlich ist es auch bei dieser Ausgestaltung möglich, die gesamte Filter-Pump-Einheit durch eine neue zu ersetzen.

Besonders bevorzugt sind solche Ausgestaltungen, bei denen das Laufrad 5 und das Filterelement 4 in einem gemeinsamen Filtergehäuse 2 angeordnet sind, das verschliess- und öffenbar ausgestaltet sein kann.

Bei der folgenden Beschreibung der weiteren Ausführungsbeispiele und deren Varianten sind gleiche oder gleichwertige Teile mit denselben Bezugszeichen wie in Fig. 1 bezeichnet. Die Erläuterungen bezüglich des ersten Ausführungsbeispiels gelten in sinngemäss gleicher Weise auch für die anderen Ausführungsbeispiele und deren Varianten. Im Folgenden wird nur auf die Änderungen und Unterschiede im Vergleich zum ersten Ausführungsbeispiel eingegangen. Umgekehrt können einige Massnahmen und Ausgestaltungen der im Folgenden beschriebenen Ausführungsbeispiele auch für das erste Ausführungsbeispiel Verwendung finden.

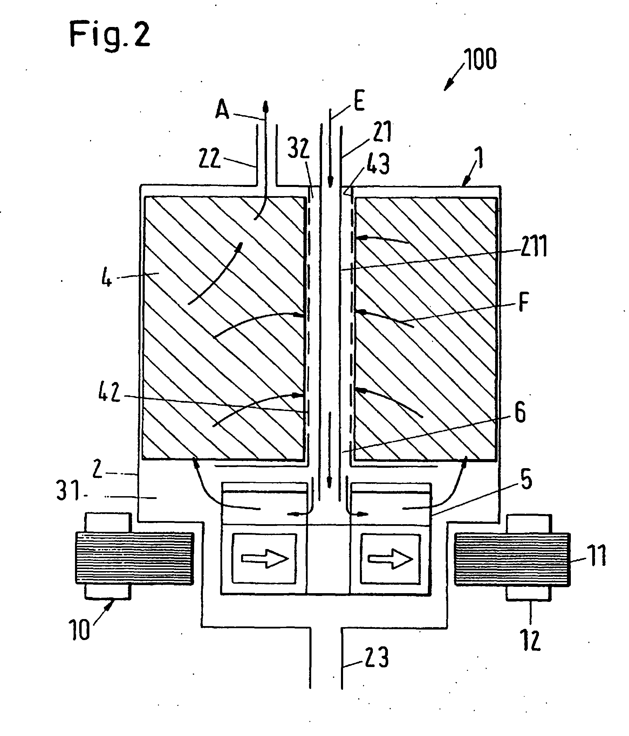

Fig. 2 zeigt ein zweites Ausführungsbeispiel einer erfindungsgemässen Filter-Pump-Einheit 1. Bei diesem ist das Filterelement 4 als schwammähnliches Filtermedium (deep media) ausgestaltet, das im wesentlichen hohlzylinderförmig ist und sich von einer inneren Abstützung 42 bis an die innere Wandung des Filtergehäuses 2 erstreckt. Die innere Abstützung 42 ist durchlässig ausgestaltet, beispielsweise gitter- oder netzförmig sodass das Fluid nach Durchströmen des Filtermediums 4 im Innenraum des Filtermediums 4 durch die Strömungsverbindung 6 zurück zum Laufrad 5 strömen kann.

Der Einlass 21 ist hier in der oberen Wandung vorgesehen und erstreckt sich in Form einer Röhre 211 durch den Ausgangsbereich 32 im Innern des Filterelements 4 bis zum Flügelrad 5. Um einen Strömungskurzschluss - ein direktes Strömen des Fluids vom Einlass 21 zum Auslass 22 ohne Durchströmung des Filterelements 4 - zu vermeiden, ist die innere Abstützung 42 im darstellungsgemäss oberen Bereich als massive das heisst fluidundurchlässige Wandung 43 ausgestaltet. Hierdurch wird vermieden, das das Fluid aus der Röhre 211 austritt, dann unmittelbar durch die Strömungsverbindung 6 und den Innenraum des Filterelements 4 zurückströmt und darstellungsgemäss oberhalb des Filterelements 4 zum Auslass 22 strömen kann, ohne das Filterelement 4 zu durchströmen.

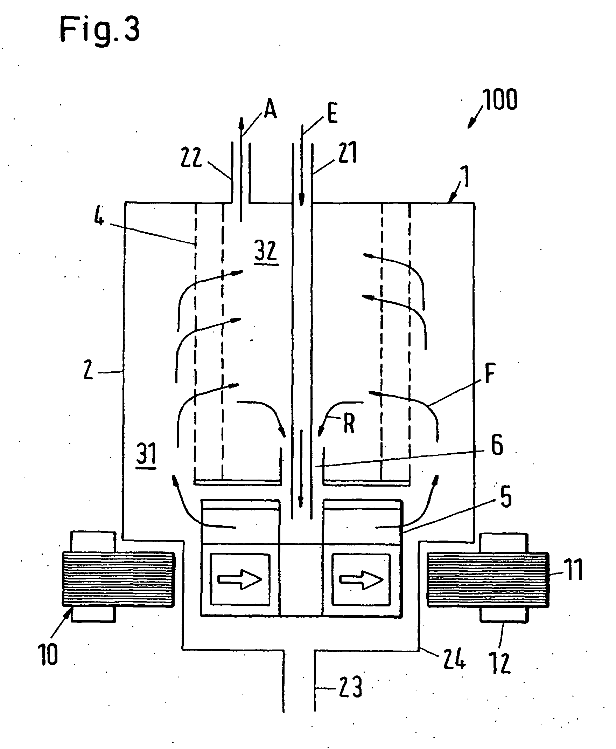

Fig. 3 zeigt ein drittes Ausführungsbeispiel einer erfindungsgemässen Filter-Pump-Einheit 1. Bei diesem ist das Filterelement 4 in gleicher Weise wie in Fig. 1 ausgestaltet. Der Einlass 21 ist zentral in der oberen Begrenzungsfläche des Filtergehäuses 2 vorgesehen und erstreckt sich von dort in Form einer Röhre 211 durch den Ausgangsbereich 32 im Innern des Filterelements 4 und durch die Strömungsverbindung 6 hindurch bis zum Laufrad 5. Es versteht sich, dass der hier vom Einlass 21 verschiedene Ablass 23 im Boden des Filtergehäuses 2 während dem Betrieb der Vorrichtung 100 üblicherweise verschlossen ist.

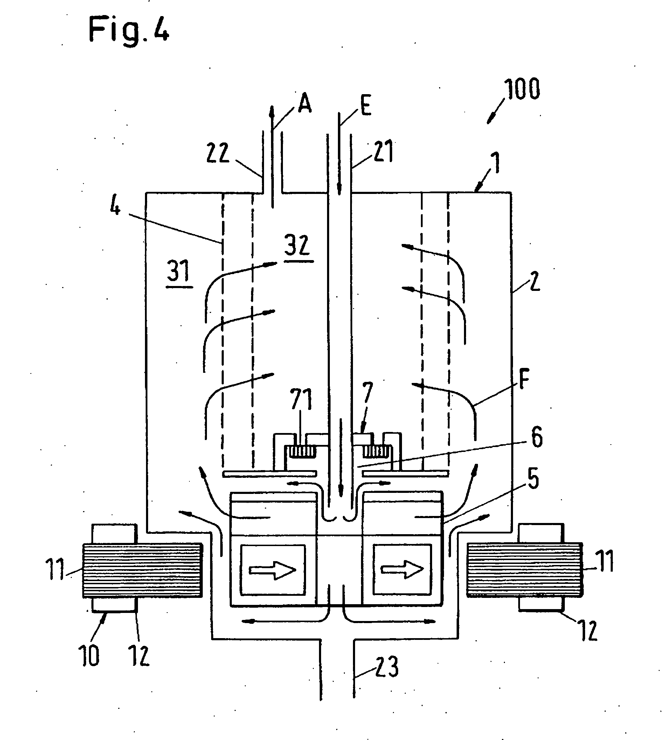

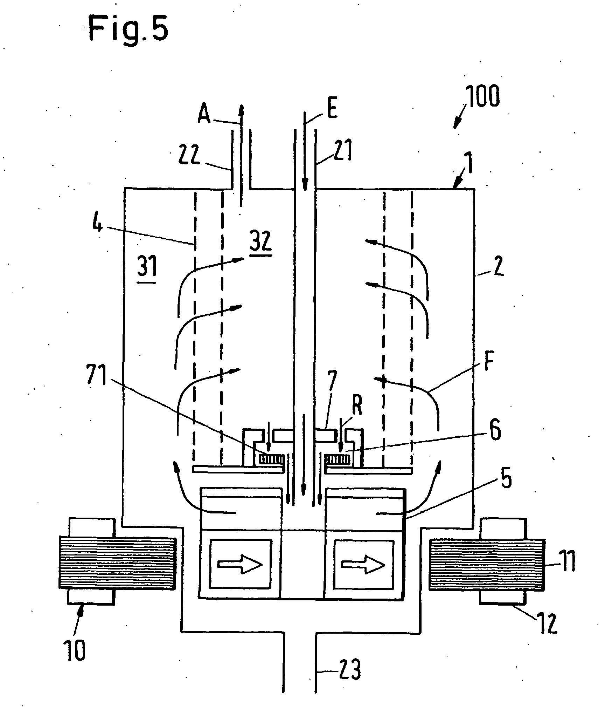

Fig. 4 und Fig. 5 zeigen eine vorteilhafte Variante des dritten Ausführungsbeispiels. Hier ist die Strömungsverbindung 6 mit einer Rücklaufsperre 7 versehen. Diese lässt das Fluid nur in einer Richtung , nämlich vom Ausgangsraum 32 zum Flügelrad 5 passieren, nicht aber in umgekehrter Richtung, also vom Laufrad 5 bzw. vom Eingangsraum 31 in den Ausgangsraum 32. Somit wird auch ein Strömungskurzschluss zwischen dem Einlass 21 und dem Auslass 22 verhindert. Die Rücklaufsperre 7 ist hier als Wegeventil mit einem ringförmigen Ventilkörper 71 ausgestaltet. Das Wegeventil sperrt den Durchgang des Fluids in einer Strömungsrichtung selbsttätig. Natürlich sind auch andere Ausgestaltungen der Rücklaufsperre 7 möglich. Fig. 4 zeigt die Rücklaufsperre 7 im geschlossenen Zustand, Fig. 5 zeigt die Rücklaufsperre 7 im durch das strömende Fluid geöffneten Zustand.

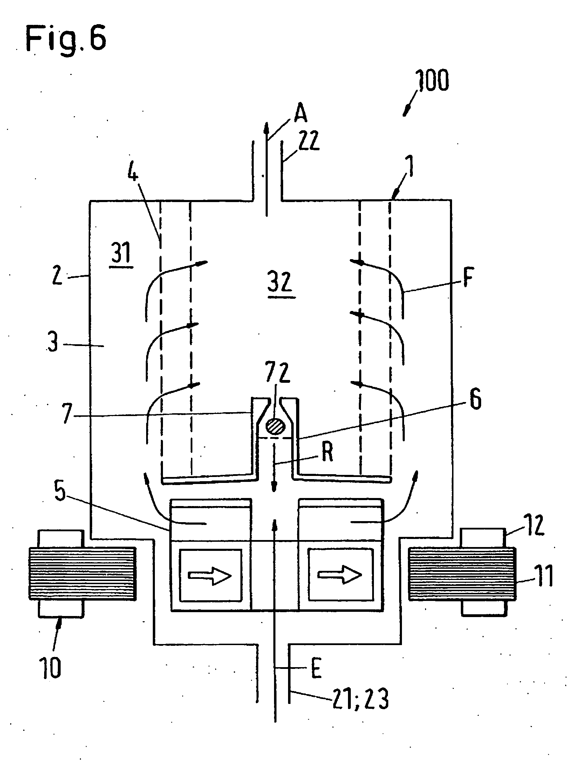

Fig. 6 zeigt ein weiteres Ausführungsbeispiel. Hier ist der Einlass 21 - wie beim ersten Ausführungsbeispiel - im Boden des Filtergehäuses 2 vorgesehen, während der Auslass 22 zentral in der oberen Wandung des Filtergehäuses vorgesehen ist. Die Strömungsverbindung 6 ist mit einem Rückschlagventil als Rücklaufsperre 7 versehen. Dieses lässt das Fluid nur in einer Richtung , nämlich vom Ausgangsraum 32 zum Flügelrad 5 passieren, nicht aber in umgekehrter Richtung, also vom Laufrad 5 bzw. vom Eingangsraum 31 in den Ausgangsraum 32. Somit wird insbesondere beim Anlaufen der Filter-Pumpvorrichtung 100 - auch ein Strömungskurzschluss zwischen dem Einlass 21 und dem Auslass 22 verhindert. Das Rückschlagventil umfasst hier in an sich bekannter Weise einen Kugelkörper 72, der federbelastet in einen Ventilsitz gedrückt wird.

Zusätzlich zu der Rücklaufsperre 7 kann natürlich auch - wie beispielsweise in Fig. 1 dargestellt - ein Regelventil vorgesehen sein, um die Menge des durch die Strömungsverbindung 6 zurückströmenden Fluids auf einen vorgebbaren Wert einzustellen. Es versteht sich, dass die Funktion der Rücklaufsperre 7 und des Regelventils 73 (Fig.1) auch in einem einzigen Ventil realisiert werden können.

Es ist möglich, alternativ oder ergänzend zu dem Regelventil 73 bzw. der Rücklaufsperre 7 mindestens ein weiteres Regelventil am Auslass 22 vorzusehen, um das Verhältnis zwischen der Menge an Fluid, die pro Zeit durch den Auslass 22 strömt und der Menge an Fluid, die pro Zeit durch die Strömungsverbindung 6 aus dem Ausgangsbereich 32 zurück zum Laufrad 5 strömt, einzustellen. Diese Mittel zum Einstellen des Verhältnisses sind vorzugsweise so ausgestaltet, dass das Verhältnis zwischen ausgestossener und rezirkulierte Fluidmenge stufenlos einstellbar ist. Es ist aber auch , möglich, die Mittel so auszugesalten, dass das Verhältnis nur auf gewisse diskrete Werte einstellbar ist1.

## Patentansprüche

1. Filter-Pump-Einheit zum Ausfiltern von Partikeln aus einem Fluid mit einem Filtergehäuse (2), das einen Filterraum (3) begrenzt und das einen Einlass (21) sowie einen Auslass (22) für das zu filternde Fluid aufweist, sowie mit einem im Filterraum (3) vorgesehenen Filterelement mit einem Innenraum (4), welches einen Eingangsbereich (31) von einem Ausgangsbereich (32) des Filterraums (3) abgrenzt, wobei der Eingangsbereich (31) mit dem Einlass (21) verbunden ist und der Ausgangsbereich (32) mit dem Auslass 22, ferner mit einem Laufrad (5), welches als Teil einer Rotationspumpe das Fluid vom Eingangsbereich (31) durch das Filterelement (4) in den Ausgangsbereich (32) fördern kann, **dadurch gekennzeichnet, dass** im Filterelement eine axiale Öffnung für eine Strömungsverbindung (6) zwischen dem Ausgangsbereich(32) und dem Laufrad (5) vorgesehen ist, sodass zumindest ein Teil des Fluids aus dem Ausgangsbereich (32) durch die Strömungsverbindung (6) aus dem Innenraum des Filterelements (4) axial zum Laufrad (5) zurückströmen kann.

2. Filter-Pump-Einheit nach Anspruch 1, bei welcher das Laufrad (5) im Filtergehäuse (2) angeordnet ist.

3. Filter-Pump-Einheit, nach einem der vorangehenden Ansprüche, bei welcher das Laufrad (5) für eine berührungslose, magnetische Lagerung ausgestaltet ist.

4. Filter-Pump-Einheit nach einem der vorangehenden Ansprüche, bei welcher Mittel vorgesehen sind, die einen Strömungskurzschluss zwischen dem Einlass (21) und dem Auslass (22) verhindern.

5. Filter-Pump-Einheit nach einem der vorangehenden Ansprüche, bei welchem in der Strömungsverbindung (6) zwischen dem Ausgangsbereich (32) und dem Laufrad (5) ein Rückschlagventil (7) vorgesehen ist.

6. Filter-Pump-Einheit nach einem der vorangehenden Ansprüche, die strömungsmechanisch derartig ausgestaltet ist, dass im Betriebszustand die Menge an Fluid, die pro Zeit durch den Auslass (22) strömt, kleiner ist als die Menge an Fluid, die pro Zeit durch die Strömungsverbindung (6) aus dem Ausgangsbereich (32) zurück zum Laufrad (5) strömt.

7. Filter-Pump-Einheit nach einem der vorangehenden Ansprüche, bei welcher Mittel (7, 73) vorgesehen sind, welche eine Einstellung, insbesondere eine stufenlose Einstellung, des Verhältnises zwischen der Menge an Fluid, die pro Zeit durch den Auslass (22) strömt und der Menge an Fluid, die pro Zeit durch die Strömungsverbindung (6) aus dem Ausgangsbereich (32) zurück zum Laufrad (5) strömt, ermöglichen.

8. Filter-Pump-Einheit nach Anspruch 7, bei welcher mindestens ein Regelventil (73) vorgesehen ist, welches die Einstellung des Verhältnises der beiden Mengen an Fluid ermöglicht.

9. Filter-Pump-Einheit nach einem der vorangehenden Ansprüche, bei welcher ein Regelventil (73) an der Strömungsverbindung (6) zwischen dem Ausgangsbereich (32) und dem Laufrad (5) vorgesehen ist.

10. Filter-Pump-Einheit nach einem der vorangehenden Ansprüche, bei welcher das Filtergehäuse (2) mit dem Filterelement (4) und dem Laufrad (5) als Wegwerfeinheit ausgestaltet ist.

11. Filter-Pump-Vorrichtung mit einer Filter-Pump-Einheit, die gemäss einem der vorangehenden Ansprüche ausgestaltet ist, sowie mit einer Antriebseinheit (10) zum Antreiben des Laufrads (5).

12. Filter-Pump-Vorrichtung nach Anspruch 8, bei welcher die Antriebseinheit (10) magnetisch mit dem Laufrad (5) gekoppelt ist.

13. Filter-Pump-Vorrichtung nach einem der Ansprüche 11 oder 12, bei welcher das Laufrad (5) als Integralrotor ausgebildet ist, und die Antriebseinheit (10) mit dem Laufrad (5) als lagerloser Motor ausgestaltet ist.

14. Verfahren zum Ausfiltern von Partikeln aus einem Fluid mittels einer Filter-Pump-Einheit mit einem Filtergehäuse (2), das einen Filterraum (3) begrenzt und das einen Einlass (21) sowie einen Auslass (22) für das zu filternde Fluid aufweist sowie mit einem im Filterraum (3) vorgesehenen Filterelement mit einem Innenraum (4), welches einen Eingangsbereich (31) von einem Ausgangsbereich (32) des Filterraums (5) abgrenzt, wobei der Eingangsbereich (31) mit dem Einlass (21) verbunden ist und der Ausgangsbereich (32) mit dem Auslass(22), bei welchern Verfahren das Fluid mittels eines Laufrads (5) vom Eingangsbereich (31) durch das Filterelement (4) in den Ausgangsbereich (32) gefördert wird, **dadurch gekennzeichnet, dass** im Filterelement eine axiale Öffnung als Strömungsverbindung (6) vorgesehen ist, und daß zumindest ein Teil des Fluids aus dem Ausgangsbereich (32) durch die Strömungsverbindung (6) des Filterelements (4) axial zum Laufrad (5) rezirkuliert wird und das Filterelement (4) **dadurch** mehrfach durchströmt.

15. Verfahren nach Anspruch 14, bei welchem das Fluid Partikel enthält, die kleiner sind als die nominelle Porengrösse des Filterelements (4).

## Claims

1. A filter and pump unit for the filtering out of particles from a fluid, having a filter housing (2) which bounds a filter space (3) and which has an inlet (21) and also an outlet (22) for the fluid to be filtered as well as having a filter element (4) with an inner space provided in the filter space (3), the filter element demarcating an inlet region (31) from an outlet region (32) of the filter space (3), with the inlet region (31) communicating with the inlet (21) and the outlet region (32) communicating with the outlet (22), furthermore having an impeller (5) which, as part of a rotary pump, can pump the fluid from the inlet region (31) through the filter element (4) into the outlet region (32), **characterized in that** an axial opening is provided in the filter element for a flow connection (6)between the outlet region (32) and the impeller (5) so that at least a part of the fluid can flow back from the outlet region (32) axially through the flow connection (6) from the inner space of the filter element (4) to the impeller (5).

2. A filter and pump unit in accordance with claim 1, in which the impeller (5) is arranged in the filter housing (2).

3. A filter and pump unit in accordance with one of the preceding claims, in which the impeller (5) is designed for contact-free magnetic journalling.

4. A filter and pump unit in accordance with one of the preceding claims, in which means are provided which prevent a flow short circuit between the inlet (21) and the outlet (22).

5. A filter and pump unit in accordance with one of the preceding claims, in which a non-return valve (7) is provided in the flow connection (6) between the outlet region (32) and the impeller (5).

6. A filter and pump unit in accordance with one of the preceding claims, which is designed fluid-mechanically such that in the operating state the quantity of fluid which flows through the outlet (22) per unit of time is smaller than the quantity of fluid which flows through the flow connection (6) out of the outlet region (32) back to the impeller (5) per unit of time.

7. A filter and pump unit in accordance with any one of the preceding claims, in which means (7, 73) are provided which enable a setting, in particular a step-less setting of the ratio between the quantity of fluid which flows through the outlet (22) per unit of time and the quantity of fluid which flows through the flow connection (6) out of the outlet region (32) back to the impeller (5) per unit of time.

8. A filter and pump unit in accordance with claim 7, in which at least one regulating valve (73) is provided which enables the setting of the ratio of the two quantities of fluid.

9. A filter and pump unit in accordance with one of the preceding claims, in which a regulating valve (73) is provided at the flow connection (6) between the outlet region (32) and the impeller (5).

10. A filter and pump unit in accordance with one of the preceding claims, in which the filter housing (2) with the filter element (4) and the impeller (5) is designed as a disposable unit.

11. A filter and pump apparatus having a filter and pump unit which is designed in accordance with one of the preceding claims and also with a drive unit (10) for the driving of the impeller (5).

12. A filter and pump apparatus in accordance with claim 8 in which the drive unit (10) is magnetically coupled to the impeller (5).

13. A filter and pump apparatus in accordance with one of the claims 11 or 12 in which the impeller (5) is formed as an integral rotor and the drive unit (10) with the impeller (5) is designed as a bearing-free motor.

14. A method for the filtering out of particles from a fluid by means of a filter and pump unit having a filter housing (2) which bounds a filter space (3) and which has an inlet (21) and also an outlet (22) for the fluid to be filtered as well as having a filter element (4) with an inner space provided in the filter space (3) which demarcates an inlet region (31) from an outlet region (32) of the filter space (5), with the inlet region (31) communicating with the inlet (21) and the outlet region (32) communicating with the outlet (22), in which method the fluid is conveyed by means of an impeller (5) from the inlet region (31) through the filter element (4) into the outlet region (32), **characterized in that** an axial opening is provided as a flow connection (6) in the filter element; and **in that** at least a part of the fluid is recirculated axially to the impeller (5) from the outlet region (32) through the flow connection (6) of the filter element (4) and thereby flows through the filter element (4) a plurality of times.

15. A method in accordance with claim 14, in which the fluid contains particles which are smaller than the nominal pore size of the filter element (4).

## Revendications

1. Unité de pompe-filtre pour l'exfiltration de particules d'un fluide avec un boîtier de filtre (2) qui délimite une enceinte de filtre (3) et qui présente une admission (21) ainsi qu'une évacuation (22) pour le fluide à filtrer, ainsi qu'avec un élément filtrant (4) avec un espace intérieur prévu dans l'enceinte de filtre (3) qui délimite une zone d'entrée (31) d'une zone de sortie (32) de l'enceinte de filtre (3), où la zone d'entrée (31) est reliée à l'admission (21) et la zone de sortie (32) à l'évacuation (22), en outre avec un rotor (5) qui est apte à convoyer, en tant que partie d'une pompe de rotation, le fluide de la zone d'entrée (31) à travers l'élément filtrant (4) dans la zone de sortie (32), **caractérisée en ce qu'**il est prévu dans l'élément filtrant une ouverture axiale pour une liaison d'écoulement (6) entre la zone de sortie (32) et le rotor (5) de sorte qu'au moins une partie du fluide peut refluer de la zone de sortie (32) par la liaison d'écoulement (6) de l'espace intérieur de l'élément filtrant (4) axialement vers le rotor (5).

2. Unité de pompe-filtre selon la revendication 1, dans laquelle le rotor (5) est disposé dans le boîtier de filtre (2).

3. Unité de pompe-filtre selon l'une quelconque des revendications précédentes, dans laquelle le rotor (5) est réalisé pour un logement magnétique sans contact.

4. Unité de pompe-filtre selon l'une des revendications précédentes, dans laquelle des moyens sont prévus qui empêchent un court-circuit d'écoulement entre l'admission (21) et l'évacuation (22).

5. Unité de pompe-filtre selon l'une des revendications précédentes, dans laquelle est prévue dans la liaison d'écoulement (6) entre la zone de sortie (32) et le rotor (5) une vanne de non-retour (7).

6. Unité de pompe-filtre selon l'une des revendications précédentes, qui est réalisée du point de vue de la mécanique d'écoulement de telle sorte qu'à l'état de fonctionnement, la quantité de fluide qui s'écoule par temps à travers l'évacuation (22), soit plus petite que la quantité de fluide qui reflue par temps par la liaison d'écoulement (6) de la zone de sortie (32) au rotor (5).

7. Unité de pompe-filtre selon l'une des revendications précédentes, dans laquelle des moyens (7, 73) sont prévus qui permettent un réglage, en particulier un réglage progressif, du rapport entre la quantité de fluide qui s'écoule par temps à travers l'évacuation (22) et la quantité de fluide qui reflue par temps par la liaison d'écoulement (6) de la zone de sortie (32) vers le rotor.

8. Unité de pompe-filtre selon la revendication 7, dans laquelle au moins une vanne de réglage (73) est prévue qui permet le réglage du rapport des deux quantités de fluide.

9. Unité de pompe-filtre selon l'une des revendications précédentes, dans laquelle une vanne de réglage (73) est prévue à la liaison d'écoulement (6) entre la zone de sortie (32) et le rotor (5).

10. Unité de pompe-filtre selon l'une des revendications précédentes, dans laquelle le boîtier de filtre (2) avec l'élément filtrant (4) et le rotor (5) est réalisé comme unité jetable.

11. Dispositif de pompe-filtre avec une unité de pompe filtre, qui est réalisée selon l'une des revendications précédentes, ainsi qu'avec une unité d'entraînement (10) pour l'entraînement du rotor (5).

12. Dispositif de pompe-filtre selon la revendication 8, dans lequel l'unité d'entraînement (10) est couplée magnétiquement au rotor (5).

13. Dispositif de pompe-filtre selon l'une des revendications 11 ou 12, dans lequel le rotor (5) est réalisé comme rotor intégral, et l'unité d'entraînement (10) est réalisée avec le rotor (5) comme moteur sans palier.

14. Procédé d'exfiltration de particules d'un fluide au moyen d'une unité de pompe-filtre avec un boîtier de filtre (2), qui délimite une enceinte de filtre (3) et qui présente une admission (21) ainsi qu'une évacuation (22) pour le fluide à filtrer, ainsi qu'avec un élément filtrant avec un espace intérieur (4) prévu dans l'enceinte de filtre (3), qui délimite une zone d'entrée (31) d'une zone de sortie (32) de l'espace filtrant (5), où la zone d'entrée (31) est reliée à l'admission (21), et la zone de sortie (32) à l'évacuation (22), procédé dans lequel le fluide est convoyé au moyen d'un rotor (5) de la zone d'entrée (31) à travers l'élément filtrant (4) dans la zone de sortie (32), **caractérisé en ce qu'**il est prévu dans l'élément filtrant une ouverture axiale comme liaison d'écoulement (6), et **en ce qu'**au moins une partie du fluide est recyclée de la zone de sortie (32) par la liaison d'écoulement (6) de l'élément filtrant (4) axialement vers le rotor (5) et s'écoule de ce fait plusieurs fois à travers l'élément filtrant (4).

15. Procédé selon la revendication 14, dans lequel le fluide contient des particules qui sont plus petites que la grandeur de pore nominale de l'élément filtrant (4).
